# EUROPÄISCHE PATENTANMELDUNG

(11) **EP 4 646 926 A1**
(43) Veröffentlichungstag der Anmeldung: **12.11.2025**
(21) Anmeldenummer: 25172920.8
(22) Anmeldetag: 28.04.2025
(51) Int. Cl.: A01K 27/00, B65H 75/44

(54) **ROLLLEINENVORRICHTUNG FÜR DAS AB- UND AUFROLLEN EINER TIERLEINE**

(30) Priorität: 06.05.2024 EP 24174342
(71) Anmelder: Diligent Verwaltung GmbH, 51063 Köln (DE)
(72) Erfinder: Traxler, Christoph, 36093 Künzell (DE); Wülbeck, Norbert, 59929 Brilon (DE)
(74) Vertreter: Zenz Patentanwälte Partnerschaft mbB

(57) **Zusammenfassung**

Die Erfindung betrifft eine Rollleinenvorrichtung (1) für das Ab- und Aufrollen einer Tierleine (2), aufweisend ein Gehäuse (3), einen Spulenkörper (4) und eine Rückholfeder (5), welche den Spulenkörper (4) in eine Aufrollposition zurück drängt oder hält, wobei eine Bremsvorrichtung (9) vorgesehen ist, welche ein zum Abbremsen des Spulenkörpers (4) ausgebildetes Bremselement (10) aufweist, wobei das Bremselement (10) gegen die Kraft eines Rückstellelements (14) aus einer Ruhestellung, in welcher der Spulenkörper (4) sich frei drehend kann, in eine Bremsstellung, in welcher das Bremselement (10) eine Drehung des Spulenkörpers (4) bremst, bewegbar ausgebildet ist, wobei eine zum Ermitteln einer vorgegebenen Restlänge der Tierleine (2) ausgebildete Restlängen-Erkennungseinrichtung (15) vorgesehen ist, und wobei eine mit der Restlägen-Erkennungseinrichtung (15) gekoppelte Automatik-Bremseinrichtung (16) vorgesehen ist, welche bei Erreichen der vorgegebenen Restlänge der Tierleine (2) das Bremselement (10) in Richtung einer Automatik-Bremsstellung drängend und den Spulenkörper (4) mit einer Automatik-Bremskraft bremsend ausgebildet ist.

## Beschreibung

Die Erfindung richtet sich auf eine Rollleinenvorrichtung für das Ab- und Aufrollen einer Tierleine, wobei die Rollleinenvorrichtung ein Gehäuse, einen drehbar an dem Gehäuse gelagerten Spulenkörper und eine Rückholfeder, welche den Spulenkörper in eine Aufrollposition, in welcher die Tierleine auf dem Spulenkörper aufgewickelt angeordnet ist, zurückdrängend oder zurückhaltend ausgebildet ist, aufweist, wobei der Spulenkörper aus der Aufrollposition heraus gegen eine Rückholkraft der Rückholfeder für ein Abrollen der aufgewickelten Tierleine drehbar ist.

Eine derartige Rollleinenvorrichtungen wird üblicherweise auch als Flex-Leine oder als selbstaufrollende Tierleine bezeichnet, wobei bekannte Flex-Leinen meist aus einer Tierleine bzw. einem Band bestehen, welches auf einem Spulenkörper an einem gehäuseartigen Handgriff aufgewickelt ist. Am Ende der Tierleine bzw. des Bandes ist ein Karabinerhaken angeordnet, an welchem ein Halsband des auszuführenden Tieres befestigt wird. Der Spulenkörper weist eine Spiralfeder auf, welche die Tierleine selbsttätig aufrollt, wenn das Tier zu seinem Besitzer bzw. zu dem Leinenführer zurückläuft.

Läuft das Tier weit genug von dem Leinenführer und damit von der Rollleinenvorrichtung weg, so dass sich die Tierleine vollständig von dem Spulenkörper abwickelt, dann erfährt das Tier einen abrupten Ruck am Hals, wobei der Leinenführer den gleichen Ruck an der Hand oder in seinem Arm spürt. Infolge des abrupten Rucks können dem Tier sogar Verletzungen zugefügt werden. Zur Vermeidung dieser Gefahren und auch zu dem Zweck, dass Tier bereits vor Erreichen des Endes der abgewickelten Tierleine stoppen zu können, ist es aus dem Stand der Technik bekannt, Rollleinenvorrichtungen mit einem manuell durch den Leinenführer zu betätigenden Bremsschalter auszustatten, welcher mechanisch in den Spulenkörper eingreift und ein weiteres Drehen des Spulenkörpers und damit Abrollen der Tierleine blockiert. Bekannt ist es auch, dass ein manuell zu betätigender Bremsschalter das Drehen des Spulenkörpers bis zum Stillstand abbremst, wobei das Erreichen des Stillstandes sowie die Wirkung des Abbremsens von der vom Leinenführer aufgebrachten Kraft auf den Bremsschalter abhängig sind. Dabei ist es nicht besonders günstig, dass die mit Hilfe des Bremsschalters bewirkte Bremswirkung allein von der Kraft des Leinenführers abhängig ist.

Der Erfindung liegt die Aufgabe zugrunde, eine Lösung zu schaffen, die auf konstruktiv einfache Weise und kostengünstig eine vereinfachte, verbesserte und effektivere Rollleinenvorrichtung bereitstellt und die Nachteile bei bekannten Rollleinenvorrichtungen vermeidet.

Diese Aufgabe wird erfindungsgemäß gelöst durch eine Rollleinenvorrichtung für das Ab- und Aufrollen einer Tierleine mit den Merkmalen gemäß dem Patentanspruch 1.

Die erfindungsgemäße Rollleinenvorrichtung für das Ab- und Aufrollen einer Tierleine weist ein Gehäuse, einen drehbar an dem Gehäuse gelagerten Spulenkörper und eine Rückholfeder auf, welche den Spulenkörper in eine Aufrollposition, in welcher die Tierleine auf dem Spulenkörper aufgewickelt angeordnet ist, zurückdrängend oder zurückhaltend ausgebildet ist, aufweist, wobei der Spulenkörper aus der Aufrollposition heraus gegen eine Rückholkraft der Rückholfeder für ein Abrollen der aufgewickelten Tierleine drehbar ist, wobei innerhalb des Gehäuses eine Bremsvorrichtung gelagert ist, welche ein zum Abbremsen des sich drehenden Spulenkörpers ausgebildetes Bremselement aufweist, wobei das Bremselement gegen die Kraft eines Rückstellelements aus einer Ruhestellung, in welcher der Spulenkörper sich frei drehend kann, in eine Bremsstellung, in welcher das Bremselement eine Drehung des Spulenkörpers bremst, bewegbar ausgebildet ist, wobei innerhalb des Gehäuses eine zum Ermitteln einer vorgegebenen und auf dem Spulenkörper aufgewickelten Restlänge der Tierleine ausgebildete Restlängen-Erkennungseinrichtung angeordnet ist, und wobei innerhalb des Gehäuses eine mit der Restlängen-Erkennungseinrichtung gekoppelte Automatik-Bremseinrichtung angeordnet ist, welche bei Erreichen der vorgegebenen und auf dem Spulenkörper aufgewickelten Restlänge der Tierleine das Bremselement in Richtung einer Automatik-Bremsstellung drängend und den Spulenkörper mit einer Automatik-Bremskraft bremsend ausgebildet ist.

Vorteilhafte und zweckmäßige Ausgestaltungen und Weiterbildungen der Erfindung ergeben sich aus den entsprechenden Unteransprüchen.

Durch die Erfindung wird eine Rollleinenvorrichtung bereitgestellt, mit welcher auf konstruktiv einfache Weise die vorstehend genannten Probleme gelöst werden. Die erfindungsgemäße, selbstaufwickelnde Rollleinenvorrichtung weist eine Automatik-Bremseinrichtung auf, welche derart ausgebildet ist, dass bei Erreichen der vorgegebenen Restlänge der Tierleine eine Automatik-Bremskraft für das Bremselement automatisch erzeugt wird. Dadurch spürt das Tier vor einem "Ruck" des Leinenendes zunächst die Automatik-Bremskraft, wodurch der "Ruck" am Leinenende reduziert wird, sollte das Tier sich weiter von dem Leinenführer entfernen und das Ende der Tierleine erreicht werden. Ferner kann durch die für das Tier spürbare Automatik-Bremskraft das Tier sein Verhalten ändern und beispielsweise sein Wegrennen verlangsamen oder sogar stoppen, insbesondere wenn das Tier die Erfahrung gemacht hat, dass nach dem Bremsen durch die Automatik-Bremskraft bei weiterem Entfernen vom Leinenführer ein "Ruck" und plötzlicher Stopp einsetzen kann.

Für ein besonders günstiges Erfassen der Restlänge der Tierleine ist in Ausgestaltung der Erfindung vorgesehen, dass die Restlängen-Erkennungseinrichtung die vorgegebene und auf dem Spulenkörper aufgewickelte Restlänge der Tierleine auf Basis einer vorgegebenen Anzahl von Umdrehungen und/oder von Teilumdrehungen des sich beim Abrollen der Tierleine drehenden Spulenkörpers ermittelnd ausgebildet ist.

Das Erfassen der Restlänge der Tierleine und das Einsetzen der Automatik-Bremskraft kann dabei in vorteilhafter Weise dadurch realisiert sein, dass die Restlängen-Erkennungseinrichtung als ein Untersetzungsgetriebe ausgebildet ist und wenigstens ein innerhalb des Gehäuses drehbar gelagertes Getrieberad aufweist, welches die Drehung des Spulenkörpers auf die Automatik-Bremseinrichtung kontinuierlich und untersetzt übertragend ausgebildet ist. Das Untersetzungsgetriebe kann beispielsweise als ein kaskadiertes Stirnradgetriebe, als ein Schneckengetriebe, als ein harmonisches Wellgetriebe oder als ein Zykloidgetriebe ausgeführt sein.

Eine vorteilhafte Alternative besteht auch darin, dass die Restlängen-Erkennungseinrichtung als ein Schrittgetriebe ausgebildet ist und ein innerhalb des Gehäuses drehbar gelagertes Stufenrad aufweist, welches die Drehung des Spulenkörpers auf die Automatik-Bremseinrichtung intermittierend übertragend ausgebildet ist. Das Schrittgetriebe, welches auch als Zählgetriebe bezeichnet werden kann, kann zum Beispiel als ein Malteserkreuzgetriebe (auch Genfer Getriebe genannt), als ein Globoidgetriebe oder als ein Indexgetriebe ausgeführt sein.

Dabei kann das Schrittgetriebe als eine Art Zähler für die Umdrehungen des Spulenkörpers ausgebildet sein, wobei die Erfindung in weiterer Ausgestaltung hierzu vorsieht, dass der Spulenkörper mit einem Treiberzahn ausgebildet ist, welcher pro einer Umdrehung des Spulenkörpers in das Stufenrad eingreifend und das Stufenrad um eine vorgegebene Stufenrad-Teilumdrehung drehend ausgebildet ist.

In weiterer Ausgestaltung des Schrittgetriebes sieht die Erfindung für eine ideale Erfassung der Drehung des Spulenkörpers vor, dass die Restlängen-Erkennungseinrichtung ein innerhalb des Gehäuses drehbar gelagertes Schrittrad aufweist, welches zwischen dem Stufenrad und der Automatik-Bremseinrichtung zwischengeschaltet angeordnet ist und welches mit der Automatik-Bremseinrichtung in Wirkverbindung bringbar ausgebildet ist, wobei das Stufenrad nach einer vorgegebene Anzahl an vorgegebenen Stufenrad-Teilumdrehungen in das Schrittrad eingreifend und das Schrittrad um eine vorgegebene Schrittrad-Teilumdrehung drehend ausgebildet ist.

Konstruktiv besonders günstig ist es in Ausgestaltung der Erfindung, wenn die Automatik-Bremseinrichtung ein Steuerelement aufweist, über welches die Restlängen-Erkennungseinrichtung mit der Bremsvorrichtung derart bewegungsgekoppelt ist, dass die Restlängen-Erkennungseinrichtung spätestens bei Erreichen der vorgegebenen und auf dem Spulenkörper aufgewickelten Restlänge der Tierleine das Steuerelement aus einer Grundstellung, in welcher das Steuerelement das Bremselement in seiner Ruhestellung haltend ausgebildet ist, in eine Betriebsstellung, in welcher das Steuerelement das Bremselement in der Automatik-Bremsstellung anordnend ausgebildet ist und das Bremselement eine Drehung des Spulenkörpers mit der Automatik-Bremskraft bremst, bewegend ausgebildet ist.

Für eine flexible Verwendung der Bremsvorrichtung ist in weiterer Ausgestaltung der Erfindung vorgesehen, dass das Steuerelement über eine Steuerelement-Feder mit der Bremsvorrichtung verbunden ist, wobei die Steuerelement-Feder vor Erreichen der vorgegebenen und auf dem Spulenkörper aufgewickelten Restlänge der Tierleine das Bremselement in der Ruhestellung haltend oder in die Ruhestellung drängend ausgebildet ist. Folglich hält das Steuerelement das Bremselement über die Steuerelement-Feder in der Ruhestellung, wobei ein manuelles Bremsen mittels eines Bremsschalters gegen die Kraft der Steuerelement-Feder jederzeit möglich ist, so dass die Steuerelement-Feder auch die Funktion aufweist, im Ruhezustand den Bremsschalter in seiner unbetätigten und ungedrückten Position zu halten.

Dementsprechend sieht die Erfindung in weiterer Ausgestaltung zur Erhöhung der Anwendungsmöglichkeiten der Rollleinenvorrichtung vor, dass ein Bremsschalter bewegbar an dem Gehäuse gelagert und derart ausgebildet ist, dass infolge einer manuellen Betätigung des Bremsschalters das Abrollen der Tierleine gebremst oder blockiert wird.

In weiterer Ausgestaltung der Erfindung ist vorgesehen, dass die Bremsvorrichtung derart ausgebildet ist, dass das Bremselement den Spulenkörper infolge einer durch das Abrollen der Tierleine bewirkten Tierleinen-Spannung automatisch erzeugten Zusatz-Bremskraft bremst, und wobei die Bremsvorrichtung eine Brems-Umlenkvorrichtung aufweist, an welcher die Tierleine umgelenkt geführt ist und welche relativ zu dem Spulenkörper bewegbar an dem Gehäuse gelagert ist und welche zum Übertragen der Tierleinen-Spannung auf das Bremselement ausgebildet ist. Die Bremsvorrichtung der erfindungsgemäßen Rollleinenvorrichtung ist folglich derart ausgebildet, dass das Bremselement den Spulenkörper infolge einer durch das Abrollen der Tierleine bewirkten Tierleinen-Spannung automatisch erzeugten Zusatz-Bremskraft bremst. Im Sinne der Erfindung ist unter "Bremsen" sowohl ein durch Reibwirkung erzeugtes Blockieren des Spulenkörpers gegen weiteres Abwickeln der Tierleine als auch ein durch Reibwirkung erzeugtes Abbremsen des Spulenkörpers und damit ein verlangsamtes Abwickeln der Tierleine zu verstehen. Mit Hilfe dieser Ausgestaltung ist es möglich, dass das Bremselement den Spulenkörper infolge einer durch das Abrollen der Tierleine bewirkten Tierleinen-Spannung automatisch erzeugten Zusatz-Bremskraft zusätzlich bremst, bevor das Ende der Tierleine erreicht ist. Auf diese Weise wird eine automatische Bremsfunktion zur Verfügung gestellt, nämlich dann, wenn die Seilspannung bzw. Tierleinen-Spannung durch das von der Rollleinenvorrichtung wegrennende Tier derart hoch ist, dass die Bremsvorrichtung das Drehen des Spulenkörpers automatisch abbremst bzw. bremst. Da die Tierleinen-Spannung über die Brems-Umlenkvorrichtung zur Automatik-Bremskraft beiträgt, kann die Zusatz-Bremskraft variiert werden, indem der Leinenführer bzw. Benutzer der Rollleinenvorrichtung die Tierleine in Bezug auf das Gehäuse und damit die Brems-Umlenkvorrichtung derart hält, dass über die Umlenkung der Tierleine weniger, gar keine oder mehr Kraft auf das Bremselement übertragen wird.

Schließlich ist es in Ausgestaltung der Erfindung von konstruktivem Vorteil, wenn die Bremsvorrichtung einen als ein einseitiger Hebel ausgebildeten Bremshebel aufweist, welcher an einer Schwenkachse an dem Gehäuse gelagert ist und an welchem das Bremselement und die Brems-Umlenkvorrichtung angebracht sind.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit den Zeichnungen, in denen ein beispielhaft bevorzugtes Ausführungsbeispiel der Erfindung dargestellt ist.

In der Zeichnung zeigt:
Figur 1 eine perspektivische Ansicht auf eine erfindungsgemäße Rollleinenvorrichtung,
Figur 2 die Rollleinenvorrichtung aus Figur 1 in einer anderen perspektivischen Ansicht und mit einem ausgeblendeten Gehäuseteil,
Figur 3 die Rollleinenvorrichtung aus Figur 1 in einer weiteren perspektivischen Ansicht und mit ausgeblendetem Gehäuse,
Figur 4 eine Perspektivansicht einer Restlängen-Erkennungseinrichtung der Rollleinenvorrichtung,
Figur 5 eine weitere Perspektivansicht der Restlängen-Erkennungseinrichtung der Rollleinenvorrichtung,
Figur 6 eine seitliche Ansicht auf die Rollleinenvorrichtung, wobei ein Steuerelement in einer Grundstellung angeordnet ist, und
Figur 7 eine seitliche Ansicht auf die Rollleinenvorrichtung, wobei das Steuerelement in einer Betriebsstellung angeordnet ist.

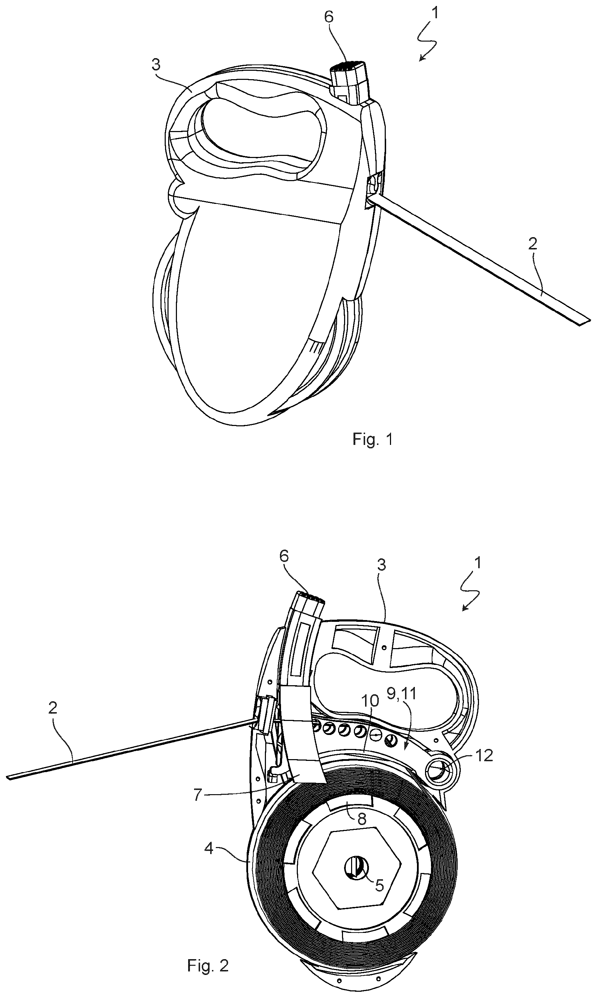

In den Figuren 1 und 2 ist eine erfindungsgemäße Rollleinenvorrichtung 1 in verschiedenen perspektivischen Ansichten gezeigt. Die Rollleinenvorrichtung 1 für das Ab- und Aufrollen einer Tierleine 2 weist ein Gehäuse 3 und einen Spulenkörper 4 auf. Das Gehäuse 3 ist mehrteilig ausgebildet, wobei in Figur 2 ein Gehäuseteil des Gehäuses 3 ausgeblendet ist, so dass der Spulenkörper 4 und eine Rückholfeder 5 zu erkennen sind. Der Spulenkörper 4 ist an dem Gehäuse 3 drehbar gelagert und in den Figuren 1 und 2 in einer Aufrollposition angeordnet, in welcher die Tierleine 2 auf dem Spulenkörper 4 aufgewickelt angeordnet ist. Die Rückholfeder 5 ist dabei derart ausgebildet, um den Spulenkörper 4 in die Aufrollposition zurückzudrängen oder zurückhalten. Der Spulenkörper 4 ist aus der Aufrollposition gegen eine Rückholkraft der Rückholfeder 5 für ein Abrollen der aufgewickelten Tierleine 2 drehbar an dem Gehäuse 3 gelagert. Ferner ist ein Bremsschalter 6 vorgesehen, welcher an dem Gehäuse 3 bewegbar gelagert ist und von einem Tierleinenführer für ein manuelles Bremsen der sich abrollenden Tierleine 2 betätigt werden kann. Mit Hilfe des Bremsschalters 6 kann eine Drehung des Spulenkörpers 4 blockiert werden, sofern der Bremsschalter 6 weit genug vom Tierleinenführer einwärts in das Gehäuse 3 eingedrückt wird, denn dann wird ein Blockierungsansatz 7 mit einer am Spulenkörper 4 ausgebildeten Ausnehmung 8 in Eingriff gebracht. Der Bremsschalter 6 kann aber auch mit einer Bremsvorrichtung 9 zusammenwirken, so dass bei weniger eingedrücktem Bremsschalter 6 der Tierleinenführer statt eines Blockierens lediglich ein Bremsen des Spulenkörpers 4 bewirkt. Ein Zusammenwirken des Bremsschalters 6 mit der Bremsvorrichtung 9 stellt für die Erfindung lediglich eine optionale Alternative dar und ist für die Erfindung nicht zwingend erforderlich.

Wie der Figur 2 zu entnehmen ist, ist die Bremsvorrichtung 9 innerhalb des Gehäuses 3 gelagert und weist ein zum Abbremsen des sich drehenden Spulenkörpers 4 ausgebildetes Bremselement 10 auf, wenn die Tierleine 2 sich abrollt. Das Bremselement 10 ist als eine Bremsbacke ausgebildet, welche zum Bremsen des sich drehenden Spulenkörpers 4 in Anlage an eine Bremsfläche des Spulenkörpers 4 bringbar ausgebildet ist. Dabei kann die Bremsfläche als ein Abschnitt einer Umfangswand des Spulenkörpers 4 ausgebildet sein.

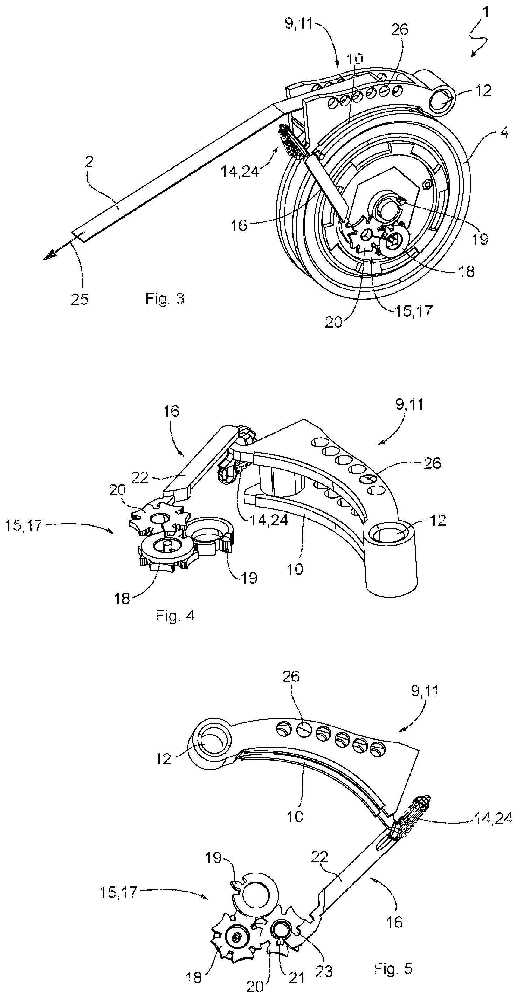

In der Figur 3 ist die erfindungsgemäße Rollleinenvorrichtung 1 in einer weiteren Perspektivansicht gezeigt, wobei allerdings das Gehäuse 3 weggelassen ist, um den Aufbau der Rollleinenvorrichtung 1 besser erkennen zu können. Mit Bezug auf die Figur 3 ist zu sehen, dass die Bremsvorrichtung 9 als ein einseitig gelagerter Bremshebel 11 ausgebildet ist, welcher an einer Schwenkachse 12 an dem Gehäuse 3 gelagert ist und an welchem das Bremselement 10 angebracht ist. Das Bremselement 10 ist gegen die Kraft eines Rückstellelements 14 aus einer Ruhestellung, in welcher der Spulenkörper 4 sich frei drehend kann, in eine Bremsstellung, in welcher das Bremselement 10 eine Drehung des Spulenkörpers 4 bremst, bewegbar ausgebildet. Erfindungsgemäß ist innerhalb des Gehäuses 3 eine zum Ermitteln einer vorgegebenen und auf dem Spulenkörper 4 aufgewickelten Restlänge der Tierleine 2 ausgebildete Restlängen-Erkennungseinrichtung 15 angeordnet. Ferner ist erfindungsgemäß innerhalb des Gehäuses 3 eine mit der Restlängen-Erkennungseinrichtung 15 gekoppelte Automatik-Bremseinrichtung 16 angeordnet, welche bei Erreichen der vorgegebenen und auf dem Spulenkörper 4 aufgewickelten Restlänge der Tierleine 2 das Bremselement 10 in Richtung einer Automatik-Bremsstellung drängend und den Spulenkörper 4 mit einer Automatik-Bremskraft bremsend ausgebildet ist.

Mit Hilfe der Restlängen-Erkennungseinrichtung 15 ist die erfindungsgemäße Rollleinenvorrichtung 1 bei sich abrollender Tierleine 2 in der Lage, eine vorgegebene Restlänge der Tierleine 2 zu erkennen. Zu diesem Zweck ist die Restleinen-Erkennungseinrichtung 15 die vorgegebene und auf dem Spulenkörper 4 aufgewickelte Restlänge der Tierleine 2 auf Basis einer vorgegebenen Anzahl von Umdrehungen und/oder von Teilumdrehungen des sich beim Abrollen der Tierleine 2 drehenden Spulenkörpers 4 ermittelnd ausgebildet. Dabei kann die Restlängen-Erkennungseinrichtung 15 als ein Untersetzungsgetriebe ausgebildet sein, so dass die Restlängen-Erkennungseinrichtung 15 wenigstens ein innerhalb des Gehäuses 3 drehbar gelagertes Getrieberad aufweist, welches die Drehung des Spulenkörpers 4 auf die Automatik-Bremseinrichtung 16 kontinuierlich und untersetzt übertragend ausgebildet ist. Bei dem in den Figuren gezeigten Ausführungsbeispiel ist die Restlängen-Erkennungseinrichtung 15 als ein Schrittgetriebe 17 ausgebildet. Wie aus den Figuren 3 bis 5 zu erkennen ist, weist die Restlängen-Erkennungseinrichtung 15 ein innerhalb des Gehäuses 3 drehbar gelagertes Stufenrad 18 auf, welches die Drehung des Spulenkörpers 4 auf die Automatik-Bremseinrichtung 16 intermittierend übertragend ausgebildet ist. Zu diesem Zweck ist der Spulenkörper 4 mit einem Treiberzahn 19 ausgebildet, welcher pro einer Umdrehung des Spulenkörpers 4 in das Stufenrad 18 eingreifend und das Stufenrad 18 um eine vorgegebene Stufenrad-Teilumdrehung drehend ausgebildet ist. Pro Umdrehung des Spulenkörpers 4 greift folglich der Treiberzahn 19 in das Stufenrad 18 ein, so dass das Stufenrad 18 mit einer Stufenrad-Teilumdrehung von beispielsweise 72° gedreht wird und nach fünf Umdrehungen des Spulenkörpers 4 das Stufenrad 18 eine vollständige Umdrehung durchgeführt hat. Wie den Figuren 3 bis 5 ferner zu entnehmen ist, weist die Restlängen-Erkennungseinrichtung 15 ein innerhalb des Gehäuses 3 drehbar gelagertes Schrittrad 20 auf. Das Schrittrad 20 ist zwischen dem Stufenrad 18 und der Automatik-Bremseinrichtung 16 zwischengeschaltet angeordnet und mit der Automatik-Bremseinrichtung 16 in Wirkverbindung bringbar ausgebildet. Das Stufenrad 18 ist ferner derart ausgebildet, dass das Stufenrad 18 nach einer vorgegebene Anzahl an vorgegebenen Stufenrad-Teilumdrehungen in das Schrittrad 20 eingreift und das Schrittrad 20 um eine vorgegebene Schrittrad-Teilumdrehung dreht. Beispielsweise dreht Schrittrad 20 nach fünf Stufenrad-Teilumdrehungen das Stufenrades 18 um eine Schrittrad-Teilumdrehung von beispielsweise 72°, wobei nach fünf Schrittrad-Teilumdrehungen das Schrittrad 20 mit der Automatik-Bremseinrichtung 16 zusammenwirkt. Für das Beispiel bedeutet dies, dass nach insgesamt fünfundzwanzig Umdrehungen des Spulenkörpers 4 das Schrittrad 20 mit der Automatik-Bremseinrichtung 16 zusammenwirkt. Die Restlängen-Erkennungseinrichtung 3 ist somit in dem gezeigten Ausführungsbeispiel als ein dreistufiges Schrittgetriebe ausgebildet, wobei das Stufenrad 18 mit einer ersten Etage, die mit dem Treiberzahn 19 des Spulenkörpers 4 zusammenwirkt, und einer zweiten Etage, die mit dem Schrittrad 20 zusammenwirkt, ausgebildet ist. Auch das Schrittrad 20 ist mit einer ersten Etage, die mit dem Stufenrad 18 zusammenwirkt, und einer zweiten Etage, die mit der Automatik-Bremseinrichtung 16 zusammenwirkt, ausgebildet. Dabei weist die zweite Etage des Schrittrades 20 einen Betätigungszahn 21 auf, welcher mit der Automatik-Bremseinrichtung 16 in Eingriff steht, wenn das Schrittrad 20 eine vorgegebene Anzahl an vorgegebenen Schrittrad-Teilumdrehung durchgeführt hat. Selbstverständlich sind auch andere Ausgestaltungen der Restlängen-Erkennungseinrichtung 15 denkbar, als sie vorstehend beschrieben wurden. Für die Erfindung ist es wesentlich, dass die Anzahl an Umdrehungen des Spulenkörpers 4 über ein Getriebe auf die Automatik-Bremseinrichtung 16 derart übertragen wird, dass nach einer vorgegebenen Anzahl an Umdrehungen des Spulenkörpers 4, welches die vorgegebene Restlänge der Tierleine 2 definiert, die Automatik-Bremseinrichtung 16 das Bremselement 10 in Richtung des Spulenkörpers 4 drängt und den Spulenkörper 4 mit einer Automatik-Bremskraft bremst.

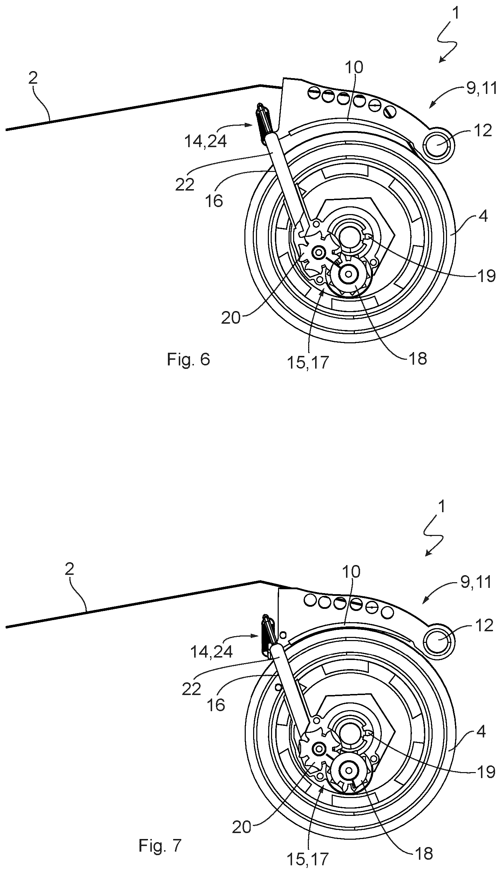

Für das Zusammenwirkern der Restlängen-Erkennungseinrichtung 15 und der Automatik-Bremseinrichtung 16 ist bei dem gezeigten Ausführungsbeispiel die Automatik-Bremseinrichtung 16 mit einem Steuerelement 22 ausgestattet. Das Steuerelement 22 ist nach Art einer Kopplungsstange ausgebildet und innerhalb des Gehäuses 3 bewegungsgeführt gelagert. Dabei ist die Restlängen-Erkennungseinrichtung 15 mit der Bremsvorrichtung 9 über das Steuerelement 22 derart bewegungsgekoppelt verbunden, dass die Restlängen-Erkennungseinrichtung 15 bei Erreichen der vorgegebenen und auf dem Spulenkörper 4 aufgewickelten Restlänge der Tierleine 2 das Steuerelement 22 aus einer Grundstellung in eine Betriebsstellung bewegt. In der Grundstellung ist das Steuerelement 22 das Bremselement 10 in seiner Ruhestellung haltend ausgebildet, so wie es in der Figur 6 gezeigt ist. Die Figur 7 zeigt die Betriebsstellung, in welcher das Steuerelement 22 das Bremselement 10 in der Automatik-Bremsstellung anordnend ausgebildet ist und das Bremselement 10 eine Drehung des Spulenkörpers 4 mit der Automatik-Bremskraft bremst. Bei dem gezeigten Ausführungsbeispiel erfolgt die Verlagerung des Stellelement 22 von der Grundstellung in die Betriebsstellung dann, wenn das Schrittrad 20 die vorgegebene Anzahl an vorgegebenen Schrittrad-Teilumdrehung durchgeführt hat, wobei zur Verlagerung der Betätigungszahn 21 in eine Steuer-Ausnehmung 23 des Steuerelements 22 eingreift und das Steuerelement 22 zu sich heranzieht, wodurch das Bremselement 10 in Richtung des Spulenkörpers 4 bewegt wird. Wie aus der Zusammenschau der Figuren 3 bis 7 zu erkennen ist, ist das Steuerelement 22 über eine Steuerelement-Feder 24 mit der Bremsvorrichtung 9 verbunden. Dabei ist die Steuerelement-Feder 24 vor Erreichen der vorgegebenen und auf dem Spulenkörper 4 aufgewickelten Restlänge der Tierleine 2 das Bremselement 10 in der Ruhestellung haltend oder in die Ruhestellung drängend ausgebildet. Ferner ist die Steuerelement-Feder 24 als das Rückstellelement 14 ausgebildet. Mit anderen Worten ist das Steuerelement 22 über das Rückstellelement 14 mit der Bremsvorrichtung 9 verbunden. Das Rückstellelement 14 bzw. die Steuerelement-Feder 24 ist folglich derart ausgebildet, um das Bremselement 10 in der Ruhestellung zu halten oder bei abgerollter Tierleine 2 in die Ruhestellung zurückzudrängen, damit die abgerollte Tierleine 2 aufgerollt werden kann, wenn eine durch das Abrollen der Tierleine 2 bewirkte Tierleinen-Spannung 25 nachlässt oder nicht mehr vorhanden ist. Andererseits ist das Rückstellelement 14 bzw. die Steuerelement-Feder 24 derart ausgebildet, um den Bremsschalter 6 im unbetätigten Zustand in seiner Ausgangsstellung zu halten, wobei der Bremsschalter 6 gegen die Kraft des Rückstellelements 14 bzw. gegen die Kraft der Steuerelement-Feder 24 von dem Tierleinenführer manuell betätigt werden kann, so dass das Bremselement 10 den Spulenkörper 4 bremst.

Schließlich kann die Bremsvorrichtung 9 bei der erfindungsgemäßen Rollleinenvorrichtung 1 derart ausgebildet sein, dass das Bremselement 10 den Spulenkörper 4 infolge der durch das Abrollen der Tierleine 2 bewirkten Tierleinen-Spannung 25 automatisch erzeugten Zusatz-Bremskraft bremst, wie es in Figur 3 veranschaulicht ist. Zu diesem Zweck weist die Bremsvorrichtung 9 eine Brems-Umlenkvorrichtung 26 (siehe Figur 3) auf, an welcher die Tierleine 2 umgelenkt geführt ist und welche relativ zu dem Spulenkörper 4 bewegbar an dem Gehäuse 3 gelagert ist und welche zum Übertragen der Tierleinen-Spannung 25 auf das Bremselement 10 ausgebildet ist. Dabei ist die Brems-Umlenkvorrichtung 26 nach Art einer Umlenkrolle ausgebildet und an dem Bremshebel 11 in einem Abstand zu der Schwenkachse 12 angebracht. Mit Hilfe der Brems-Umlenkvorrichtung 26 kann das Bremselement 10 den Spulenkörper 4 infolge der automatisch erzeugten Zusatz-Bremskraft, welche durch die Tierleinen-Spannung 25 beim Abrollen der Tierleine 2 erzeugt wird, automatisch bremsen, noch bevor die Restlänge der Tierleine 2 erreicht ist. Wenn bei Erreichen der Restlänge der Tierleine 2 die Tierleinen-Spannung 25 und damit die erzeugte Zusatz-Bremskraft größer als die Automatik-Bremskraft sind, dann wirkt die Zusatz-Bremskraft als Bremskraftverstärkung und erhöht die Bremswirkung des Bremselements 10.

Die vorstehend beschriebene Erfindung ist selbstverständlich nicht auf das beschriebene und dargestellte Ausführungsbeispiel beschränkt. Es ist ersichtlich, dass an der in den Zeichnungen dargestellten Ausführungsform zahlreiche, dem Fachmann entsprechend der beabsichtigten Anwendung naheliegende Abänderungen vorgenommen werden können, ohne dass dadurch der Bereich der Erfindung verlassen wird. Zur Erfindung gehört alles dasjenige, was in der Beschreibung enthalten und/oder in den Zeichnungen dargestellt ist, einschließlich dessen, was abweichend von dem konkreten Ausführungsbeispiel für den Fachmann naheliegt.

### Bezugszeichenliste

- 1: Rollleinenvorrichtung
- 2: Tierleine
- 3: Gehäuse
- 4: Spulenkörper
- 5: Rückholfeder
- 6: Bremsschalter
- 7: Blockierungsansatz
- 8: Ausnehmung
- 9: Bremsvorrichtung
- 10: Bremselement
- 11: Bremshebel
- 12: Schwenkachse
- 14: Rückstellelement
- 15: Restlängen-Erkennungseinrichtung
- 16: Automatik-Bremseinrichtung
- 17: Schrittgetriebe
- 18: Stufenrad
- 19: Treiberzahn
- 20: Schrittrad
- 21: Betätigungszahn
- 22: Steuerelement
- 23: Steuer-Ausnehmung
- 24: Steuerelement-Feder
- 25: Tierleinen-Spannung
- 26: Brems-Umlenkvorrichtung

## Patentansprüche

1. Rollleinenvorrichtung (1) für das Ab- und Aufrollen einer Tierleine (2), wobei die Rollleinenvorrichtung (1) ein Gehäuse (3), einen drehbar an dem Gehäuse (3) gelagerten Spulenkörper (4) und eine Rückholfeder (5), welche den Spulenkörper (4) in eine Aufrollposition, in welcher die Tierleine (2) auf dem Spulenkörper (4) aufgewickelt angeordnet ist, zurückdrängend oder zurückhaltend ausgebildet ist, aufweist, wobei der Spulenkörper (4) aus der Aufrollposition heraus gegen eine Rückholkraft der Rückholfeder (5) für ein Abrollen der aufgewickelten Tierleine (2) drehbar ist,
wobei innerhalb des Gehäuses (3) eine Bremsvorrichtung (9) gelagert ist, welche ein zum Abbremsen des sich drehenden Spulenkörpers (4) ausgebildetes Bremselement (10) aufweist,
wobei das Bremselement (10) gegen die Kraft eines Rückstellelements (14) aus einer Ruhestellung, in welcher der Spulenkörper (4) sich frei drehend kann, in eine Bremsstellung, in welcher das Bremselement (10) eine Drehung des Spulenkörpers (4) bremst, bewegbar ausgebildet ist,
wobei innerhalb des Gehäuses (3) eine zum Ermitteln einer vorgegebenen und auf dem Spulenkörper (4) aufgewickelten Restlänge der Tierleine (2) ausgebildete Restlängen-Erkennungseinrichtung (15) angeordnet ist, und
wobei innerhalb des Gehäuses (3) eine mit der Restlängen-Erkennungseinrichtung (15) gekoppelte Automatik-Bremseinrichtung (16) angeordnet ist, welche bei Erreichen der vorgegebenen und auf dem Spulenkörper (4) aufgewickelten Restlänge der Tierleine (2) das Bremselement (10) in Richtung einer Automatik-Bremsstellung drängend und den Spulenkörper (4) mit einer Automatik-Bremskraft bremsend ausgebildet ist.

2. Rollleinenvorrichtung (1) nach Anspruch 1, wobei die Restlängen-Erkennungseinrichtung (15) die vorgegebene und auf dem Spulenkörper (4) aufgewickelte Restlänge der Tierleine (2) auf Basis einer vorgegebenen Anzahl von Umdrehungen und/oder von Teilumdrehungen des sich beim Abrollen der Tierleine (2) drehenden Spulenkörpers (4) ermittelnd ausgebildet ist.

3. Rollleinenvorrichtung (1) nach einem der vorhergehenden Ansprüche, wobei die Restlängen-Erkennungseinrichtung (15) als ein Untersetzungsgetriebe ausgebildet ist und wenigstens ein innerhalb des Gehäuses (3) drehbar gelagertes Getrieberad aufweist, welches die Drehung des Spulenkörpers (4) auf die Automatik-Bremseinrichtung (16) kontinuierlich und untersetzt übertragend ausgebildet ist.

4. Rollleinenvorrichtung (1) nach Anspruch 1 oder 2, wobei die Restlängen-Erkennungseinrichtung (15) als ein Schrittgetriebe (17) ausgebildet ist und ein innerhalb des Gehäuses (3) drehbar gelagertes Stufenrad (18) aufweist, welches die Drehung des Spulenkörpers (4) auf die Automatik-Bremseinrichtung (16) intermittierend übertragend ausgebildet ist.

5. Rollleinenvorrichtung (1) nach Anspruch 4, wobei der Spulenkörper (4) mit mindestens einem Treiberzahn (19) ausgebildet ist, welcher pro einer Umdrehung des Spulenkörpers (4) in das Stufenrad (18) eingreifend und das Stufenrad (18) um eine vorgegebene Stufenrad-Teilumdrehung drehend ausgebildet ist.

6. Rollleinenvorrichtung (1) nach Anspruch 5, wobei die Restlängen-Erkennungseinrichtung (15) ein innerhalb des Gehäuses (3) drehbar gelagertes Schrittrad (20) aufweist, welches zwischen dem Stufenrad (18) und der Automatik-Bremseinrichtung (16) zwischengeschaltet angeordnet ist und welches mit der Automatik-Bremseinrichtung (16) in Wirkverbindung bringbar ausgebildet ist, wobei das Stufenrad (18) nach einer vorgegebene Anzahl an vorgegebenen Stufenrad-Teilumdrehungen in das Schrittrad (20) eingreifend und das Schrittrad (20) um eine vorgegebene Schrittrad-Teilumdrehung drehend ausgebildet ist.

7. Rollleinenvorrichtung (1) nach einem der vorhergehenden Ansprüche, wobei die Automatik-Bremseinrichtung (16) ein Steuerelement (22) aufweist, über welches die Restlängen-Erkennungseinrichtung (15) mit der Bremsvorrichtung (9) derart bewegungsgekoppelt ist, dass die Restlängen-Erkennungseinrichtung (15) spätestens bei Erreichen der vorgegebenen und auf dem Spulenkörper (4) aufgewickelten Restlänge der Tierleine (2) das Steuerelement (22) aus einer Grundstellung, in welcher das Steuerelement (22) das Bremselement (10) in seiner Ruhestellung haltend ausgebildet ist, in eine Betriebsstellung, in welcher das Steuerelement (22) das Bremselement (10) in der Automatik-Bremsstellung anordnend ausgebildet ist und das Bremselement (10) eine Drehung des Spulenkörpers (4) mit der Automatik-Bremskraft bremst, bewegend ausgebildet ist.

8. Rollleinenvorrichtung (1) nach Anspruch 7, wobei das Steuerelement (22) über eine Steuerelement-Feder (24) mit der Bremsvorrichtung (9) verbunden ist, wobei die Steuerelement-Feder (24) vor Erreichen der vorgegebenen und auf dem Spulenkörper (4) aufgewickelten Restlänge der Tierleine (2) das Bremselement (10) in der Ruhestellung haltend oder in die Ruhestellung drängend ausgebildet ist.

9. Rollleinenvorrichtung (1) nach einem der vorhergehenden Ansprüche, wobei ein Bremsschalter (6) bewegbar an dem Gehäuse (3) gelagert und derart ausgebildet ist, dass infolge einer manuellen Betätigung des Bremsschalters (6) das Abrollen der Tierleine (2) gebremst oder blockiert wird.

10. Rollleinenvorrichtung (1) nach einem der vorhergehenden Ansprüche, wobei die Bremsvorrichtung (9) derart ausgebildet ist, dass das Bremselement (10) den Spulenkörper (4) infolge einer durch das Abrollen der Tierleine (2) bewirkten Tierleinen-Spannung (25) automatisch erzeugten Zusatz-Bremskraft bremst, und wobei die Bremsvorrichtung (9) eine Brems-Umlenkvorrichtung (26) aufweist, an welcher die Tierleine (2) umgelenkt geführt ist und welche relativ zu dem Spulenkörper (4) bewegbar an dem Gehäuse (3) gelagert ist und welche zum Übertragen der Tierleinen-Spannung (25) auf das Bremselement (10) ausgebildet ist.

11. Rollleinenvorrichtung (1) nach Anspruch 10, wobei die Bremsvorrichtung (9) einen als ein einseitiger Hebel ausgebildeten Bremshebel (11) aufweist, welcher an einer Schwenkachse (12) an dem Gehäuse (3) gelagert ist und an welchem das Bremselement (10) und die Brems-Umlenkvorrichtung (26) angebracht sind.
